# FASCICULE DE BREVET EUROPEEN

(11) **EP 4 211 336 B1**
(45) Date de publication et mention de la délivrance du brevet: **08.10.2025**
(21) Numéro de dépôt: 21778167.3
(22) Date de dépôt: 31.08.2021
(51) Int. Cl.: F01D 5/28, B29C 70/24, F01D 21/04, F02K 3/06

(54) **HYBRIDATION DES FIBRES DU RENFORT FIBREUX D'UNE AUBE DE SOUFFLANTE AVEC DES FIBRES ÉLASTIQUES**
HYBRIDE FASERN EINER VERSTÄRKTEN STRUKTUR EINER LAUFSCHAUFEL EINER GEBLÄSE MIT ELASTISCHEN FASERN
HYBRID FIBERS OF A REINFORCEMENT STRUCTURE OF A FAN BLADE COMPRISING ELASTIC FIBERS

(30) Priorité: 11.09.2020 FR 2009192
(43) Date de publication de la demande: 19.07.2023
(73) Titulaire: SAFRAN AIRCRAFT ENGINES, 75015 Paris (FR)
(72) Inventeur: POSTEC, Clément Pierre, 77550 MOISSY-CRAMAYEL (FR); DE GAILLARD, Thomas Alain, 77550 MOISSY-CRAMAYEL (FR); GONDRE, Guillaume Pascal Jean-Charles, 77550 MOISSY-CRAMAYEL (FR); BARBIER, Pierre-Antoine Gérard Joseph, 77550 MOISSY-CRAMAYEL (FR)
(74) Mandataire: Regimbeau
(86) Numéro de dépôt international: PCT/FR2021/051501
(87) Numéro de publication internationale: WO 2022/053753

(56) Documents cités:
- FR-A1- 3 040 909
- FR-A1- 3 087 699
- US-A- 5 839 882
- US-A1- 2011 176 927

## Description

### DOMAINE DE L'INVENTION

L'invention concerne de manière générale le domaine des turbomachines, et plus particulièrement celui des aubes de soufflantes de ces turbomachines et leur procédé de fabrication.

L'invention s'applique plus particulièrement aux aubes de soufflante en matériau composite et leur interaction avec l'entrée de la veine primaire.

### ETAT DE LA TECHNIQUE

Les aubes de turbomachine, et notamment les aubes de soufflante, subissent d'importantes contraintes mécaniques et thermiques et doivent satisfaire à des conditions strictes de poids et d'encombrement. Il a donc été proposé d'utiliser des aubes dans un matériau composite comportant un renfort fibreux densifié par une matrice polymère, qui sont plus légères par rapport à des aubes métalliques à caractéristiques propulsives équivalentes et qui ont une tenue à la chaleur satisfaisante.

Lors de la certification et de la vie d'un moteur, les aubes de soufflante sont soumises à des ingestions d'oiseaux et de grêlons. Toutefois, selon le type de l'objet impactant l'aube (et notamment sa taille, sa masse) et selon le type de soufflante (vitesse de rotation et nombre d'aubes), les zones privilégiées d'initiation et de propagation des endommagements sont différentes. Le comportement mécanique des aubes de soufflante est donc optimisé pendant la phase de conception des aubes pour respecter les règles de certification.

Par ailleurs, les conceptions actuelles tendent à réduire l'épaisseur de la structure en matériau composite des aubes dans les zones du bord d'attaque, du bord de fuite voire sur l'ensemble de la structure afin d'améliorer les performances aérodynamiques. A iso-matériau et iso-loi d'empilage, la capacité de l'aube à résister à un impact se trouve par conséquent réduite.

Le document FR3087701 au nom de la Demanderesse décrit une aube de soufflante d'une turbomachine comportant un renfort fibreux obtenu par tissage tridimensionnel de torons comprenant une première portion formant le bord d'attaque et une deuxième portion formant tout ou partie du bord de fuite. Ce document propose en particulier une hybridation des torons du renfort fibreux pour utiliser au mieux les propriétés mécaniques de chaque toron en fonction des zones de l'aube et du type de sollicitation, ce qui permet d'améliorer de manière efficace le comportement à l'ingestion de l'aube. Plus précisément, les torons du renfort fibreux comprennent des premiers torons présentant un allongement à la rupture prédéfini qui ont pour fonction de permettre de respecter les critères de conception de l'aube, et notamment le statut fréquentiel de l'aube, et des deuxièmes torons présentant un allongement à la rupture supérieur à celui des premiers torons (typiquement, entre 1.5 et 3 fois l'allongement à la rupture des premiers torons) et qui ont pour fonction de limiter l'initiation et la propagation des endommagements de l'aube lors d'ingestion d'objets, et notamment d'oiseaux. La première portion comprend tout ou partie des premiers torons tandis que la deuxième portion comprend tout ou partie des deuxièmes torons.

En fonctionnement, la Demanderesse s'est aperçue du fait que, lors d'ingestion d'objets dans la soufflante, les torons de chaine du renfort fibreux étaient susceptibles de se fissurer dans la zone de l'impact, tandis que les torons de chaine et de trame étaient susceptibles de se fissurer par propagation d'onde au niveau du bord de fuite et du sommet de l'aube. Or, lors de la conception d'une aube, il est nécessaire d'optimiser la tenue de l'aube lors de l'ingestion d'un objet en lui conférant une souplesse suffisante pour limiter les risques de propagation de fissures, mais également sa tenue mécanique et aérodynamique, qui concernent le déplacement statique de l'aube (dévrillage, jeux, etc.) et qui au contraire nécessite que l'aube présente un maximum de raideur.

Le document US 2011/176927 décrit une aube comprenant deux peaux et un cœur en matériaux composites. Le document FR 3 087 699 décrit une aube de soufflante comprenant des premiers torons et des deuxièmes torons ayant un allongement à la rupture supérieur à celui des premiers torons. Le document US 5 839 882 décrit une aube métallique. Le document FR 3 040 909 décrit une aube comprenant une préforme fibreuse et un pli unidirectionnel.

### EXPOSE DE L'INVENTION

Un but de l'invention est de remédier aux inconvénients précités, en proposant une aube de soufflante pour une turbomachine dont le comportement à l'ingestion est amélioré.

Il est à cet effet proposé, selon un premier aspect de l'invention une aube de soufflante d'une turbomachine comprenant une structure en matériau composite comprenant un renfort fibreux obtenu par tissage tridimensionnel de torons et une matrice dans laquelle est noyé le renfort fibreux, la structure en matériau composite comprenant une paroi intrados et une paroi extrados, le renfort fibreux comprenant une première portion formant la paroi extrados et une deuxième portion formant la paroi intrados, et les torons du renfort fibreux comprenant des premiers torons comprenant des fibres de carbone ou d'aramide dont le module d'Young est supérieur à 250 GPa. Les torons du renfort fibreux comprennent en outre des deuxièmes torons réalisés dans un matériau viscoélastique et présentant un module d'Young inférieur à 10 GPa. Par ailleurs, la première portion comprend uniquement des premiers torons tandis que la deuxième portion comprend des deuxièmes torons.

Certaines caractéristiques préférées mais non limitatives de l'aube de soufflante selon le premier aspect sont les suivantes, prises individuellement ou en combinaison :
- la deuxième portion est dépourvue de premiers torons ;
- l'aube comprend en outre une pale à profil aérodynamique propre à s'étendre dans un flux d'air présentant une hauteur déterminée, la deuxième portion s'étendant sur au plus 60 % de la hauteur de la pale depuis un sommet de ladite pale ;
- la deuxième portion comprend une zone d'amortissement s'étendant sur une portion de longueur de corde comprise entre zéro pourcent et soixante pourcents de la corde ;
- la deuxième portion comprend une zone de confinement comprenant un bord de fuite et un sommet de l'aube et s'étendant sur une portion de longueur de corde au plus égale à 10% de la corde ;
- l'aube comprend en outre une pale à profil aérodynamique propre à s'étendre dans un flux d'air présentant une hauteur déterminée, la zone de confinement de la deuxième portion s'étendant sur au plus 30 % de la hauteur de la pale depuis le sommet de la pale ;
- le renfort fibreux comprend en outre une troisième portion s'étendant entre la première portion et la deuxième portion, une densité des deuxièmes torons augmentant progressivement dans la troisième portion de la première portion vers la deuxième portion ; et/ou
- le matériau viscoélastique comprend l'un au moins des matériaux suivants : un élastomère, du polyuréthane, du caoutchouc.

Selon un deuxième aspect, l'invention propose également une soufflante pour une turbomachine comprenant une pluralité d'aubes selon le premier aspect, une turbomachine comprenant une telle soufflante et un aéronef comprenant cette turbomachine.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un exemple d'aube de soufflante conforme à un mode de réalisation de l'invention.
La figure 2 est une vue en coupe de l'aube de la figure 1 suivant l'axe A - A.
La figure 3 est une vue en coupe partielle et schématique de l'aube suivant de la figure 1 l'axe B - B.
La figure 4 est une vue en perspective d'un exemple de soufflante conforme à un mode de réalisation de l'invention.

Sur l'ensemble des figures, les éléments similaires portent des références identiques.

### DESCRIPTION DETAILLEE DE L'INVENTION

Dans la présente demande, l'amont et l'aval sont définis par rapport au sens d'écoulement normal du gaz dans la soufflante 1 à travers la turbomachine. Par ailleurs, on appelle axe de révolution de la soufflante 1 turbomachine, l'axe X de symétrie radiale de la soufflante 1. La direction axiale correspond à la direction de l'axe X de la soufflante 1 et une direction radiale est une direction perpendiculaire à cet axe et passant par lui. Enfin, on utilisera interne et externe (ou intérieur et extérieur), respectivement, en référence à une direction radiale de sorte que la partie ou la face interne d'un élément est plus proche de l'axe X que la partie ou la face externe du même élément.

Une soufflante 1 de turbomachine comprend un disque 2 de soufflante 1 portant une pluralité d'aubes 3 de soufflante 1, associées à des plateformes inter-aubes.

Chaque aube 3 comprend une structure en matériau composite comportant un renfort fibreux 4 obtenu par tissage tridimensionnel et une matrice dans laquelle est noyé le renfort fibreux 4.

Cette structure en matériau composite comprend un pied 5 et une pale 7 à profil aérodynamique. Le pied 5 est destiné à permettre la fixation de l'aube au disque 2 de soufflante et s'étend à cet effet entre un fond d'une empreinte formée dans le disque 2 et les plateformes inter-aubes. La pale 7 à profil aérodynamique quant à elle est propre à être placée dans un flux d'air, lorsque la turbomachine est en fonctionnement, afin de générer une portance.

L'aube 3 comprend également, de manière connue en soi, un bord d'attaque 8, un bord de fuite 9, une paroi intrados 6a et une paroi extrados 6b. Le bord d'attaque 8 est configuré pour s'étendre en regard de l'écoulement des gaz entrant dans la turbomachine. Il correspond à la partie antérieure d'un profil aérodynamique qui fait face au flux d'air et qui divise l'écoulement d'air en un écoulement d'intrados et en un écoulement extrados. Le bord de fuite 9 quant à lui correspond à la partie postérieure du profil aérodynamique, où se rejoignent les écoulements intrados et extrados. Optionnellement, l'aube 3 comprend en outre un bouclier métallique 19 rapporté et fixé sur le bord d'attaque 8.

Enfin, la structure est formée d'une pluralité de sections d'aube empilées depuis le pied 5 jusqu'à un sommet 11 selon un axe d'empilement Z s'étendant radialement par rapport à l'axe de révolution X de la soufflante 1.

Dans ce qui suit, par « hauteur » on désignera une distance suivant l'axe d'empilement Z.

Ainsi, la pale 7 présente une hauteur H correspondant à la distance suivant l'axe d'empilement Z entre sa limite inférieure 10, à l'interface avec le pied 5, et son sommet 11. La hauteur H de la pale 7 peut par exemple être mesurée à l'intersection entre le bord d'attaque 8 et la limite inférieure 10 de la pale 7.

Le renfort fibreux 4 peut être formé à partir d'une préforme fibreuse en une seule pièce obtenue par tissage tridimensionnel ou multicouche avec épaisseur évolutive. Il comprend des torons de chaîne et de trame qui peuvent notamment comprendre des fibres en carbone, en verre, en basalte, et/ou en aramide. La matrice quant à elle est typiquement une matrice polymère, par exemple époxyde, bismaléimide ou polyimide. L'aube 3 est alors formée par moulage au moyen d'un procédé d'injection sous vide de résine du type RTM (pour « Resin Transfer Moulding), ou encore VARRTM (pour Vacuum Resin Transfer Molding).

Les torons formant le renfort fibreux 4 comprennent des premiers torons 12 comprenant des fibres de carbone ou d'aramide dont le module d'Young est supérieur à 250 GPa et des deuxièmes torons 14 és dans un matériau viscoélastique et présentant un module d'Young inférieur à 10 GPa. Le renfort fibreux 4 est donc obtenu par hybridation des torons 12, 14 le constituant afin d'utiliser au mieux les propriétés mécaniques de chaque toron 12, 14 en fonction des zones de l'aube 3 et du type de sollicitation.

Les premiers torons 12 ont pour fonction de permettre de respecter les critères de conception de l'aube 3, et notamment le statut fréquentiel de l'aube 3. Ces premiers torons 12 sont donc utilisés dans le tissage du renfort fibreux 4 pour former la portion du renfort 4 (ou première portion 13) qui comprend globalement la paroi extrados 6b de l'aube 3. De préférence, la première portion 13 comprend également les parties basses et les parties épaisses de l'aube 3, pour que les fréquences propres de l'aube 3 soient élevées, pour assurer la tenue de l'aube 3 aux efforts centrifuges et pour éviter les déplacements en sommet 11 de l'aube afin d'améliorer les performances dynamiques. Cela permet ainsi de limiter ou du moins d'éloigner les croisements fréquentiels entre les premiers modes propres de l'aube 3, énergétiques, et les harmoniques moteur. Les parties basses et les parties épaisses de l'aube 3 comprennent ici le pied 5 de l'aube 3, le cœur de l'aube 3 (zone située entre la paroi intrados 6a et la paroi extrados 6b), une partie inférieure de la pale 7, le bord d'attaque 8 et une partie inférieure du bord de fuite 7.

Les deuxièmes torons 14 quant à eux, dont le module d'Young est beaucoup plus faible que les premiers torons 12, ont pour fonction d'amortir une partie de l'énergie d'impact d'un objet (tel qu'un oiseau) et ainsi de limiter l'endommagement de l'aube 3 dans les cas d'ingestion. En particulier, la deuxième portion 15 a pour fonction de limiter la propagation d'onde vers le bord de fuite 9 et donc son endommagement. Le choix de deuxièmes torons 14 dans un matériau viscoélastique présentant un très faible module d'Young par rapport aux premiers torons 12 permet d'absorber l'énergie d'impact. Ces deuxièmes torons 14 sont donc utilisés dans le tissage du renfort fibreux 4 pour former une portion du renfort 4 (ou deuxième portion 15) qui comprend tout ou partie de la paroi intrados 6a et une partie supérieure du bord de fuite 9, dans la mesure où ces zones sont fortement sollicitées en cas d'ingestion d'objet. En particulier, la Demanderesse s'est aperçue qu'en cas d'impact d'objet, les torons de chaine de la paroi intrados 6a de l'aube 3 pouvaient se fissurer et créer des décohésions par choc et que les torons de chaine formant le bord de fuite 9 et les torons de trame formant le sommet 11 de l'aube pouvaient se fissurer par propagation d'onde, au niveau du sommet 11 de l'aube 9. Le cas échéant, seuls les deuxièmes torons 14 sont utilisés comme torons de chaîne et/ou de trame dans le tissage de la deuxième portion 15.

Les deuxièmes torons 14 peuvent comprendre des torons de chaîne (c'est-à-dire des torons s'étendant suivant l'axe d'empilement Z des sections d'aube 3) et/ou de trame du renfort 4 (c'est-à-dire des torons s'étendant globalement dans la direction de la corde C de l'aube 3). Par ailleurs, la deuxième portion 15 s'étend de préférence dans une zone supérieure de l'aube 3 (qui sera détaillée par la suite de la description), depuis le sommet 11 de l'aube 3.

Le renfort 4 comprend en outre une portion intermédiaire 18 s'étendant entre la première portion 13 et la deuxième portion 15 qui est formée à la fois par les premiers torons 12 et les deuxièmes torons 14. De préférence, seuls les premiers et deuxièmes torons 12, 14 sont utilisés comme torons de chaîne et de trame dans le tissage de la portion intermédiaire 18.

Cette portion intermédiaire 18 est configurée pour servir d'interface entre la première portion 13 et la deuxième portion 15 afin de limiter les fragilités dues à des discontinuités de matériaux. Lorsque le renfort fibreux 4 comprend uniquement des premiers torons 12 dans la première portion 13 de l'aube 3 et uniquement des deuxièmes torons 14 dans la deuxième portion 15 de l'aube 3, et que la première portion 13 et la deuxième portion 15 sont bout à bout dans le renfort 4, le renfort fibreux 4 ainsi obtenu permet effectivement d'éviter les endommagements de l'aube 3 dans les zones comprenant les deuxièmes torons 14. Toutefois, le Demandeur s'est aperçu du fait qu'en l'absence de portion intermédiaire 18, c'est-à-dire en introduisant de manière abrupte des deuxièmes torons 14 et en supprimant simultanément les premiers torons 12 à l'interface entre la première portion 13 et la deuxième portion 15 du renfort fibreux 4, l'aube 3 obtenue risquait d'être fortement endommagée au niveau de cette interface en cas d'impact, car l'interface entre les deux portions 11, 12 du renfort 4 est fragilisée par la discontinuité forte des propriétés matériaux.

La portion intermédiaire 18 permet ainsi de faire une transition entre les propriétés matériaux de la première portion 13 et les propriétés matériaux de la deuxième portion 15. Pour cela, la densité des deuxièmes torons 14 est progressivement augmentée au sein de la portion intermédiaire 18 de la première portion 13 vers la deuxième portion 15. Plus précisément, à l'interface entre la première portion 13 et la portion intermédiaire 18, la densité des deuxièmes torons 14 est très faible tandis que la densité des premiers torons 12 est très forte. En revanche, à l'interface entre la portion intermédiaire 18 et la deuxième portion 15, la densité des deuxièmes torons 14 est très forte tandis que la densité des premiers torons 12 est très faible.

La deuxième portion 15 comprend une zone d'amortissement 16 s'étendant à distance du bord d'attaque 8 et du bord de fuite 9 de l'aube 3 et configurée pour amortir les impacts d'objets et limiter les risques de fissuration des torons du renfort fibreux par décohésion. Dans une forme de réalisation, la zone d'amortissement 16 s'étend sur une portion de longueur de corde C comprise entre zéro et soixante pourcents de la corde C, sur toute sa hauteur (c'est-à-dire en tout point de l'axe d'empilement Z au sein de la zone d'amortissement 16). De manière conventionnelle, par corde C, on comprendra ici, pour une section donnée de l'aube 3 (et donc pour un point donné de l'axe d'empilement Z), le segment de droite connectant le bord d'attaque 8 au bord de fuite 9 de l'aube 3.

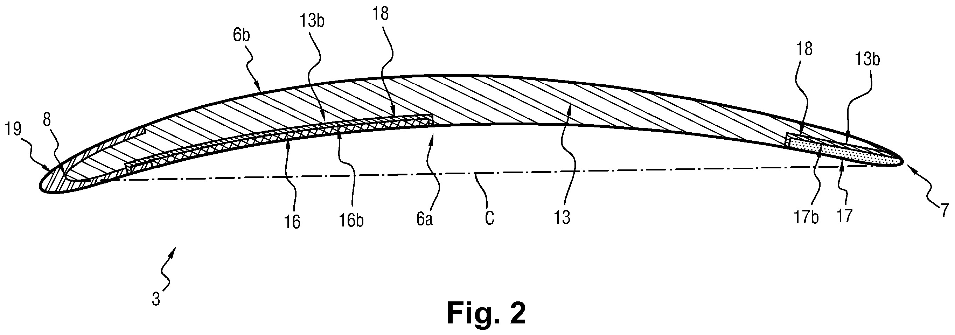

Le cas échéant, la zone d'amortissement est en partie recouverte par le bouclier métallique 19 de bord d'attaque de l'aube 3. Dans ce cas, la zone d'amortissement peut présenter une épaisseur évolutive le long de la corde C de sorte que la face libre de la paroi intrados 6a de l'aube 3 soit plane et continue à l'interface entre le bord aval du bouclier métallique 19 et la zone d'amortissement 16 (voir figure 2).

Afin de respecter les critères de conception de l'aube 3, la zone d'amortissement 16 ne s'étend que sur une partie de la hauteur H de la pale 7, de préférence dans la zone supérieure de la pale 7. Pour cela, la zone d'amortissement 16 de la deuxième portion 15 s'étendant sur environ 60 % de la hauteur H de la pale 7, depuis le sommet 11 de la pale 7. En d'autres termes, la zone d'amortissement 16 forme la paroi intrados 6a de l'aube 3 de 40% de hauteur à 100% de hauteur de la pale 7. La Demanderesse a déterminé que la hauteur critique pour des oiseaux lourds est à environ 40 % de la hauteur de la pale 7 et que la hauteur critique pour les oiseaux de taille moyenne (medium birds en anglais) est à environ 85 % de la hauteur de la pale 7. Cette extension de la zone d'amortissement 16 permet ainsi de couvrir à la fois les zones d'impacts des oiseaux lourds et des oiseaux de taille moyenne.

La deuxième portion 15 comprend en outre une zone de confinement 17 configurée pour empêcher la propagation des ondes en cas d'impact et d'éviter ainsi la fissuration des torons de trame et de chaîne du renfort fibreux 4. Pour cela, la zone de confinement 17 couvre la portion de la paroi intrados 6a qui comprend une partie du bord de fuite 9 et du sommet 11 de l'aube 3 et s'étend sur une portion de longueur de corde C égale à au plus 10% de la corde. De plus, toujours pour respecter les critères de conception de l'aube 3, la zone de confinement 17 de la deuxième portion 15 s'étendant sur environ 30 % de la hauteur de la pale 7 depuis le sommet 11 de la pale 7. En d'autres termes, la zone d'amortissement 16 forme la paroi intrados 6a de l'aube 3 de 70% de hauteur à 100% de hauteur de la pale 7.

On notera bien entendu que la position et l'extension (hauteur, longueur et épaisseur) des zones d'amortissement et de confinement 16, 17 de la deuxième portion 15 peuvent être optimisées au cas par cas en fonction des chargements subits par l'aube 3, la hauteur H de la pale 7 et du nombre d'aubes 3 dans la soufflante 1 (et plus généralement du type de turbomachine dans laquelle est intégrée la soufflante 1). De préférence, la zone d'amortissement 16 et la zone de confinement 17 sont disjointes.

Les dimensions de la portion intermédiaire 18 sont déterminées en fonction du dimensionnement de l'aube 3, et donc du type de soufflante 1 et plus généralement de turbomachine dans laquelle elle est destinée à être intégrée. La hauteur (dimension suivant l'axe d'empilement Z) de la portion intermédiaire 18 est comprise entre 5% et 30% de la hauteur H de la pale 7. Ainsi, la hauteur de la portion intermédiaire 18 peut être comprise entre un centimètre et dix centimètres. Par ailleurs, sur toute la hauteur de la deuxième portion 15, l'épaisseur (dimension suivant un axe perpendiculaire à la corde C et à l'axe d'empilement Z) de la portion intermédiaire 18 peut être comprise entre 5 % et 30 % de l'épaisseur du renfort fibreux 4.

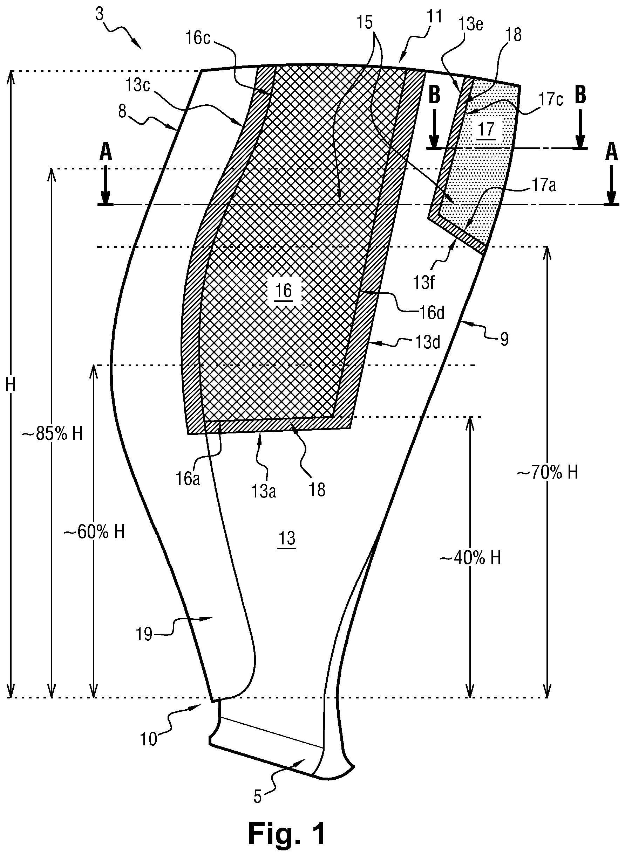

La figure 1 représente schématiquement une aube 3 dont le renfort fibreux 4 a été mis en forme à partir d'une préforme fibreuse tissée tridimensionnelle, avant injection de résine ou densification par une matrice et usinage éventuel, afin d'obtenir une aube 3 de soufflante 1 en matériau composite conforme à l'invention. Par tissage tridimensionnel, on comprendra que les torons de chaîne suivent des trajets sinueux afin de lier entre eux des torons de trame appartenant à des couches de torons de trame différentes exception faite de déliaisons, étant noté qu'un tissage tridimensionnel, notamment à armure interlock, peut inclure des tissages 2D en surface. Différentes armures de tissage tridimensionnel peuvent être utilisées, telles que des armures interlock, multi-satin ou multi-voile, par exemple, comme décrit notamment dans le document WO 2006/136755.

Dans une première forme de réalisation, l'aube 3 comprend la première portion 13, la deuxième portion 15 et la portion intermédiaire 18, la première portion 13 ne comprenant que des premiers torons 12. Pour simplifier le descriptif des différentes portions 13, 15, 18 du renfort fibreux 4, on désignera par « horizontal » une direction suivant la corde C de l'aube 3 et par « vertical » une direction suivant l'axe d'empilement Z.

Comme indiqué plus haut, la deuxième portion 15 forme une partie de la paroi intrados 6a et comprend la zone d'amortissement 16 et la zone de confinement 17. La zone d'amortissement 16 de la deuxième portion 15 s'étend depuis une première limite inférieure « horizontale » 16a, qui peut être située à environ 40 % de la hauteur H de la pale 7, jusqu'au sommet 11 de l'aube 3. La zone d'amortissement 16 s'étend en outre depuis la face libre de la paroi intrados 6a sur une profondeur donnée jusqu'à une première limite interne « verticale » 16b (c'est-à-dire globalement suivant l'axe d'empilement Z), au sein du renfort fibreux 4, et sur une portion longueur de corde C comprise entre zéro pourcent et soixante pourcents de la corde C, à distance du bord d'attaque 8 et du bord de fuite 9, entre une première limite amont 16v et une première limite aval 16d « verticales ».

La zone de confinement 17 de la deuxième portion 15 s'étend depuis une deuxième limite inférieure « horizontale » 17a, qui peut être située à environ 70 % de la hauteur H de la pale 7, jusqu'au sommet 11 de l'aube 3. La zone de confinement 17 s'étend en outre depuis la face libre de la paroi intrados 6a jusqu'à sur une profondeur donnée jusqu'à une deuxième limite interne « verticale » 17b (qui peut être à la même profondeur que la première limite interne 16b) et sur une portion longueur de corde C au plus égale à 10% de la corde à partir du bord de fuite 9, jusqu'à une deuxième limite amont « verticale » 17c. Optionnellement, comme illustré sur la figure 1, la deuxième limite inférieure 17a peut être inclinée par rapport à la corde C, de sorte que la hauteur de la zone de confinement 17 au niveau de sa deuxième limite amont 17c est plus grande que sa hauteur au niveau du bord de fuite 9.

La première portion 13 forme le pied 5 de l'aube 3, une partie inférieure de la pale 7 s'étendant du pied 5 à une troisième limite inférieure « horizontale » 13a (qui est plus proche du pied 5 que la première limite inférieure « horizontale »). La première portion 13 comprend en outre la partie supérieure de la pale 7, à l'exception de zones d'amortissement 16 et de confinement 17 décrites ci-dessus et de la portion intermédiaire 18, qui entoure ces deux zones 16, 17. Ainsi, la première portion 13 comprend en outre une partie de la paroi intrados 6a et le cœur de l'aube 3, qui s'étend au sein du renfort fibreux 4 de la troisième limite inférieure 13a jusqu'au sommet 11 et d'une troisième limite interne « verticale » 13b (adjacente à la première limite interne 16 et à la deuxième limite interne 17b) jusqu'à la paroi extrados 6b. La partie de la paroi intrados 6a qui est formée par la première portion 13 entoure la zone d'amortissement 16 et la zone de confinement 17 et comprend, du bord d'attaque 8 vers le bord de fuite 9 : le bord d'attaque 8 (sur toute la hauteur H de la pale 7) jusqu'à une troisième limite amont 13c (située en amont de la première limite amont 16c) et une partie s'étendant depuis une deuxième limite aval « verticale » 13d (située en aval de la première limite aval 16d) jusqu'au bord de fuite 9 en contournant la zone de confinement 17, où la première portion 13 s'arrête au niveau d'une quatrième limite amont « verticale » 13e (située en amont de la deuxième limite amont 17c) et d'une quatrième limite inférieure « horizontale » 13f (située radialement à l'intérieur par rapport à la deuxième limite inférieure 17a). L'ensemble de ces parties de la première portion 13 sont formées intégralement et en une seule pièce par tissage tridimensionnel des premiers torons 12 et sont donc connectées les unes aux autres par des premiers torons 12 uniquement.

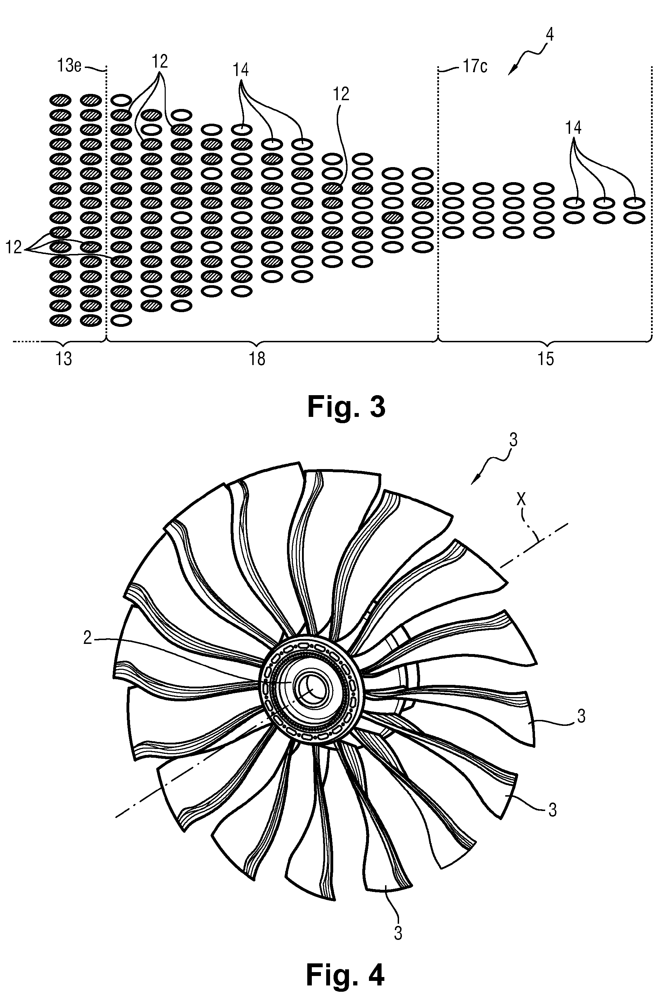

La portion intermédiaire 18 s'étend entre les limites « horizontales » (16a, 13a, 17a, 13f et « verticales » 16c, 13c, 16b, 13b, 16d, 13d, 17c, 13e, 17b et 13b décrites ci-dessus, afin de permettre une transition progressive de densité et de propriétés mécaniques entre la première portion 13 et la deuxième portion 15 (voir à titre illustratif la figure 3). A cet effet, la portion intermédiaire 18 comprend une première partie entourant la zone d'amortissement 16 de la deuxième portion 15 et une deuxième partie entourant la zone de confinement 17 de la deuxième portion 15. Ainsi, la première partie s'étend radialement à l'intérieur par rapport à la zone d'amortissement 16 (entre la première limite inférieure 16a et la troisième limite inférieure 13a), entre le bord d'attaque 8 et la zone d'amortissement 16 (entre la troisième limite amont 13c et la première limite amont 16c), en aval de la zone d'amortissement 16 du sommet 11 de l'aube 3 jusqu'à la troisième limite inférieure 13a (entre la première limite aval 16d et la deuxième limite aval 13d) et à l'intérieur du renfort fibreux 4 (entre la première limite interne et la deuxième limite interne). La deuxième partie de la portion intermédiaire 18 s'étend radialement à l'intérieur par rapport à la zone de confinement 17 (entre la deuxième limite inférieure 17a et la quatrième limite inférieure 13f), en amont de la zone de confinement 17 (entre la quatrième limite amont 13e et la deuxième limite amont 17c) et à l'intérieur du renfort fibreux 4 (entre la première limite interne 16b et la troisième limite interne 13b et entre la deuxième limite interne 17b et la troisième limite interne 13b). La première partie et la deuxième partie de la portion intermédiaire 18 sont chacune formées intégralement et en une seule pièce par tissage tridimensionnel des premiers torons 12 et des deuxièmes torons 14, la densité des premiers torons 12 diminuant progressivement des limites horizontales (respectivement, verticales) adjacentes à la première portion 13 vers les limites horizontales (respectivement, verticales) adjacentes à la deuxième portion 15.

Dans cette première forme de réalisation, les deux parties de la portion intermédiaire 18 peuvent être réalisées en sortant successivement les premiers torons 12 du tissage de la préforme, au niveau des différents plans de chaîne et/ou de trame constituant les parties de la portion intermédiaire 18 et en les coupant au niveau de la surface du renfort fibreux 4 avant injection, et en introduisant simultanément les deuxièmes torons 14 entre ces plans de chaîne et/ou de trame, comme cela est décrit dans le document FR3087701. De la sorte, la première portion 13, la deuxième portion 15 et la portion intermédiaire 18 sont formées d'une seule pièce lors du tissage tridimensionnel de l'aube 3. Afin d'assurer la transition des propriétés mécaniques entre la première portion 13 et la deuxième portion 15 du renfort fibreux 4 au niveau de la portion intermédiaire 18, le pourcentage par rapport au nombre de torons de chaîne total dans une colonne (et/ou au nombre de torons de trame total dans une ligne) de deuxièmes torons 14 introduits entre deux colonnes de torons de chaîne immédiatement adjacentes c'est-à-dire séparés par uniquement une ligne de torons de trame (et/ou entre deux lignes de torons de trame immédiatement adjacentes, c'est-à-dire séparés par uniquement une colonne de torons de chaîne) de la portion intermédiaire 18 est au plus égal à 30 %. De préférence, ce pourcentage est compris entre 5 % et 15 %.

Dans une deuxième forme de réalisation, le renfort fibreux 4 comprend la première portion 13, la deuxième portion 15 et la portion intermédiaire 18, la première portion 13 comprenant les premiers torons 12 et des deuxièmes torons 14. Les limites horizontales et verticales décrites ci-dessus entre la première portion 13, la deuxième portion 15 et la portion intermédiaire 18 sont identiques dans cette deuxième forme de réalisation. En revanche, dans une première variante de réalisation, les deuxièmes torons 14 de chaîne sont insérés à cœur depuis le pied 5 de l'aube et sont amenés en surface au niveau des limites horizontales et verticales décrites ci-avant de sorte à former la portion intermédiaire 18 et la deuxième portion 15. Le renfort fibreux 4 comprend donc des deuxièmes torons 14 de chaîne sur toute la hauteur H de la pale 7 et du pied 5. En revanche, seule la partie de la première portion 13 qui forme le cœur du renfort fibreux 4 comprend des deuxièmes torons 14, le reste de la première portion 13 qui forme la face extrados 6b, le bord d'attaque 8 et le bord de fuite 9 étant dépourvu de deuxièmes torons 14 afin d'assurer la tenue mécanique de l'aube 3.

Dans une deuxième variante de réalisation (qui peut être cumulée avec la première variante), les deuxièmes torons 14 de trame sont insérés sur toute la corde C de l'aube 3, sur la hauteur de la zone d'amortissement 16 et de la portion intermédiaire 18, depuis le bord d'attaque 8 et sont amenés en surface au niveau des limites horizontales et verticales décrites ci-avant de sorte à former la portion intermédiaire 18 et la deuxième portion 15. Le renfort fibreux 4 comprend donc des deuxièmes torons 14 de chaîne sur toute la corde C de l'aube, sur la hauteur de la zone d'amortissement 16 de la deuxième portion 15 et la hauteur de la première partie de la portion intermédiaire 18. En revanche, seule la partie de la première portion 13 qui s'étend sur la hauteur de la deuxième portion 15 et de la portion intermédiaire 18, le pied 5 et la partie inférieure de la pale 7 étant dépourvus de deuxièmes torons 14 afin d'assurer la tenue mécanique de l'aube 3.

Dans cette deuxième forme de réalisation, les deux parties de la portion intermédiaire 18 peuvent être réalisées en enfouissant progressivement les premiers torons 12 au sein de la préforme (vers le cœur) au niveau des différents plans de chaîne et/ou de trame constituant les parties de la portion intermédiaire 18 et en amenant simultanément les deuxièmes torons 14 en surface depuis le cœur de la préforme, au niveau de ces plans de chaîne et de trame.

Les premiers torons 12 présentent un module d'Young E élevé, c'est-à-dire supérieur à 250 GPa, de préférence supérieur à 270 GPa.

Par exemple, les premiers torons 12 peuvent comprendre des fibres de carbone, typiquement des fibres de carbone HS T300 (E = 284 GPa), HS TR30S (E = 356 GPa) ou HS T700 (E = 395 GPa) ou encore des fibres d'aramide à haut module du type Dupont Kevlar 49 (E = 302 GPa).

Les deuxièmes torons 14 comprennent un matériau viscoélastique qui peut comprendre l'un au moins des matériaux suivants : un matériau élastomère, du polyuréthane, du caoutchouc.

De manière générale, les configurations décrites sont valables pour des moteurs dont la soufflante 1 peut avoir un diamètre extérieur de l'ordre de 1,8 mètre à 3 mètres. Le nombre d'aubes 3 de la soufflante 1 peut être égal à 16 ou 18. Quel que soit le diamètre de la soufflante 1, le nombre d'aubes 3 de soufflante sera réduit autant que possible. Parmi différents critères, un choix de paramètres (notamment de la hauteur de la zone d'amortissement 16 et la profondeur de la deuxième portion 15) dépendra plus particulièrement du comportement de l'aube de soufflante et de la combinaison « fréquentielle/dimensionnement en ingestion ». En effet, pour une même cible moteur, il est possible de choisir différentes stratégies de comportements fréquentiels ou réponses fréquentielles en différents cas d'ingestions, par exemple pour repousser les réponses d'aube et d'aubage en évitant des croisements vibratoires avec des harmoniques énergétiques du moteur. Par exemple, il est possible de faire des choix de manière à positionner ces croisements au niveau de régimes moteur transitoires.

L'hybridation des torons du renfort fibreux 4 permet en outre d'ouvrir le champ de conception grâce à l'apport supplémentaire en tenue mécanique. Par exemple, il devient possible d'affiner le profil de l'aube 3 au niveau du bord d'attaque 8 du renfort fibreux 4 ou du bord de fuite 9 du renfort fibreux 4 ou sur toute sa hauteur H en comparaison avec une aube ne comprenant que des premiers torons (à haut module d'Young), ce qui permet d'optimiser la masse de l'aube 3 et les performances aérodynamiques de la soufflante 1 (en obtenant des profils plus fins ou en réduisant le rapport de moyeu, qui est lié à la baisse de l'effort centrifuge induit par la masse de l'aube 3).

## Revendications

1. Aube (3) de soufflante (1) d'une turbomachine comprenant une structure en matériau composite comprenant un renfort fibreux (4) obtenu par tissage tridimensionnel de torons (12, 14) et une matrice dans laquelle est noyé le renfort fibreux (4) ;
la structure en matériau composite comprenant une paroi intrados (6a) et une paroi extrados (6b) ;
le renfort fibreux (4) comprenant une première portion (13) formant la paroi extrados (6b) et une deuxième portion (15) formant la paroi intrados (6a) ; et
les torons du renfort fibreux (4) comprenant des premiers torons (12) comprenant des fibres de carbone ou d'aramide dont le module d'Young est supérieur à 250 GPa ;
l'aube (3) étant **caractérisée en ce que** les torons du renfort fibreux (4) comprennent en outre des deuxièmes torons (14) réalisés dans un matériau viscoélastique et présentant un module d'Young inférieur à 10 GPa et **en ce que** la première portion (13) comprend uniquement des premiers torons (12) tandis que la deuxième portion (15) comprend des deuxièmes torons (14).

2. Aube (3) selon la revendication 1, dans laquelle la deuxième portion (15) est dépourvue de premiers torons (12).

3. Aube (3) selon l'une des revendications 1 ou 2, comprenant en outre une pale (7) à profil aérodynamique propre à s'étendre dans un flux d'air présentant une hauteur (H) déterminée, la deuxième portion (15) s'étendant sur au plus 60 % de la hauteur (H) de la pale (7) depuis un sommet de ladite pale (7).

4. Aube (3) selon l'une des revendications 1 à 3, dans laquelle la deuxième portion (15) comprend une zone d'amortissement (16) s'étendant sur une portion de longueur de corde (C) comprise entre zéro pourcent et soixante pourcents de la corde (C)f.

5. Aube (3) selon l'une des revendications 1 à 4, dans laquelle la deuxième portion (15) comprend une zone de confinement (17) comprenant un bord de fuite et un sommet de l'aube (3) et s'étendant sur une portion de longueur de corde (C) au plus égale à 10% de la corde.

6. Aube (3) selon la revendication 5, comprenant en outre une pale (7) à profil aérodynamique propre à s'étendre dans un flux d'air présentant une hauteur (H) déterminée, la zone de confinement (17) de la deuxième portion (15) s'étendant sur au plus 30 % de la hauteur (H) de la pale (7) depuis le sommet de la pale (7).

7. Aube (3) selon l'une des revendications 1 à 6, dans laquelle le renfort fibreux (4) comprend en outre une troisième portion (18) s'étendant entre la première portion (13) et la deuxième portion (15), une densité des deuxièmes torons (14) augmentant progressivement dans la troisième portion (18) de la première portion (13) vers la deuxième portion (15).

8. Aube (3) selon l'une des revendications 1 à 7, dans laquelle le matériau viscoélastique comprend l'un au moins des matériaux suivants : un élastomère, du polyuréthane, du caoutchouc.

9. Soufflante (1) pour une turbomachine comprenant une pluralité d'aubes (3) conformes à l'une des revendications 1 à 8.

10. Turbomachine comprenant une soufflante selon la revendication 9.

11. Aéronef comprenant une turbine selon la revendication 10.

## Patentansprüche

1. Schaufel (3) eines Gebläses (1) einer Turbomaschine, umfassend eine Struktur aus Verbundwerkstoff, die eine Faserverstärkung (4) umfasst, die durch dreidimensionales Weben von Litzen (12, 14) erhalten wird, und eine Matrix, in die die Faserverstärkung (4) eingebettet ist;
wobei die Struktur aus Verbundwerkstoff eine Unterseitenwand (6a) und eine Oberseitenwand (6b) umfasst;
wobei die Faserverstärkung (4) einen ersten Abschnitt (13), der die Oberseitenwand (6b) bildet, und einen zweiten Abschnitt (15), der die Unterseitenwand (6a) bildet, umfasst; und
die Litzen der Faserverstärkung (4) erste Litzen (12) mit Kohlenstoff- oder Aramidfasern umfassen, deren Young-Modul größer als 250 GPa ist;
wobei die Schaufel (3) **dadurch gekennzeichnet ist, dass** die Litzen der Faserverstärkung (4) ferner zweite Litzen (14) umfassen, die aus einem viskoelastischen Material hergestellt sind und ein Young-Modul von weniger als 10 GPa aufweisen und dass der erste Abschnitt (13) ausschließlich erste Litzen (12) umfasst, während der zweite Abschnitt (15) zweite Litzen (14) umfasst.

2. Schaufel (3) nach Anspruch 1, wobei der zweite Abschnitt (15) keine ersten Litzen (12) aufweist.

3. Schaufel (3) nach einem der Ansprüche 1 oder 2, die ferner ein Blatt (7) mit aerodynamischem Profil umfasst, das imstande ist, sich in einen Luftstrom zu erstrecken, der eine bestimmte Höhe (H) aufweist, wobei sich der zweite Abschnitt (15) über höchstens 60% der Höhe (H) des Blatts (7) ab einem Scheitelpunkt des Blatts (7) erstreckt.

4. Schaufel (3) nach einem der Ansprüche 1 bis 3, wobei der zweite Abschnitt (15) einen Dämpfungsbereich (16) umfasst, der sich über einen Sehnenlängenabschnitt (C) zwischen null Prozent und sechzig Prozent der Sehne (C)f erstreckt.

5. Schaufel (3) nach einem der Ansprüche 1 bis 4, wobei der zweite Abschnitt (15) einen Begrenzungsbereich (17) umfasst, der eine Hinterkante und einen Scheitelpunkt der Schaufel (3) umfasst und sich über einen Sehnenlängenabschnitt (C) von höchstens gleich 10% der Sehne erstreckt.

6. Schaufel (3) nach Anspruch 5, die ferner ein Blatt (7) mit aerodynamischem Profil umfasst, das imstande ist, sich in einen Luftstrom zu erstrecken, der eine bestimmte Höhe (H) aufweist, wobei sich der Begrenzungsbereich (17) des zweiten Abschnitts (15) über höchstens 30% der Höhe (H) des Blatts (7) ab dem Scheitelpunkt des Blatts (7) erstreckt.

7. Schaufel (3) nach einem der Ansprüche 1 bis 6, wobei die Faserverstärkung (4) ferner einen dritten Abschnitt (18) umfasst, der sich zwischen dem ersten Abschnitt (13) und dem zweiten Abschnitt (15) erstreckt, wobei eine Dichte der zweiten Litzen (14) im dritten Abschnitt (18) vom ersten Abschnitt (13) zum zweiten Abschnitt (15) allmählich zunimmt.

8. Schaufel (3) nach einem der Ansprüche 1 bis 7, wobei das viskoelastische Material mindestens eines der folgenden Materialien umfasst: ein Elastomer, Polyurethan, Gummi.

9. Gebläse (1) für eine Turbomaschine, das eine Vielzahl von Schaufeln (3) nach einem der Ansprüche 1 bis 8 umfasst.

10. Turbomaschine, die ein Gebläse nach Anspruch 9 umfasst.

11. Flugzeug, das eine Turbine nach Anspruch 10 umfasst.

## Claims

1. A fan (1) blade (3) of a turbomachine comprising a structure made of composite material comprising a fibrous reinforcement (4) obtained by three-dimensional weaving of strands (12, 14) and a matrix in which the fibrous reinforcement (4) is embedded;
the structure made of composite material comprising a pressure-side wall (6a) and a suction-side wall (6b);
the fibrous reinforcement (4) comprising a first portion (13) forming the suction-side wall (6b) and a second portion (15) forming the pressure-side wall (6a); and
the strands of the fibrous reinforcement (4) comprising first strands (12) comprising carbon or aramid fibers the Young's modulus of which is greater than 250 GPa ;
the blade (3) being **characterized in that** the strands of the fibrous reinforcement (4) further comprise second strands (14) produced from a viscoelastic material and having a Young's modulus less than 10 GPa and **in that** the first portion (13) comprises uniquely first strands (12) whereas the second portion (15) comprises second strands (14).

2. The blade (3) according to claim 1, wherein the second portion (15) has no first strands (12).

3. The blade (3) according to one of claims 1 or 2, further comprising a vane (7) with an aerodynamic profile capable of extending in an air flow having a determined height (H), the second portion (15) extending over at most 60% of the height (H) of the vane (7) from a tip of said vane (7).

4. The blade (3) according to one of claims 1 to 3, wherein the second portion (15) comprises a damping area (16) extending over a portion of chord (C) length comprised between zero percent and sixty percent of the chord (C)f.

5. The blade (3) according to one of claims 1 to 4, wherein the second portion (15) comprises a confinement area (17) comprising a trailing edge and a tip of the blade (3) and extending over a portion of chord length (C) at most equal to 10% of the chord.

6. The blade (3) according to claim 5, further comprising a vane (7) with an aerodynamic profile capable of extending in an air flow having a determined height (H), the confinement area (17) of the second portion (15) extending over at most 30% of the height (H) of the vane (7) from the tip of the vane (7).

7. The blade (3) according to one of claims 1 to 6, wherein the fibrous reinforcement (4) further comprises a third portion (18) extending between the first portion (13) and the second portion (15), a density of the second strands (14) gradually increasing in the third portion (18) from the first portion (13) towards the second portion (15).

8. The blade (3) according to one of claims 1 to 7, wherein the viscoelastic material comprises at least one of the following materials: an elastomer, polyurethane, rubber.

9. A fan (1) for a turbomachine comprising a plurality of blades (3) in accordance with one of claims 1 to 8.

10. A turbomachine comprising a fan according to claim 9.

11. An aircraft comprising a turbine according to claim 10.
